# EUROPÄISCHE PATENTSCHRIFT

(11) **EP 2 875 252 B1**
(45) Veröffentlichungstag und Bekanntmachung des Hinweises auf die Patenterteilung: **31.05.2017**
(21) Anmeldenummer: 13758719.2
(22) Anmeldetag: 16.07.2013
(51) Int. Cl.: F16D 25/08

(54) **KOLBEN-ZYLINDER-ANORDNUNG, INSBESONDERE FÜR EIN KUPPLUNGSBETÄTIGUNGSSYSTEM IN EINEM KRAFTFAHRZEUG**
PISTON-CYLINDER ARRANGEMENT, IN PARTICULAR FOR A CLUTCH ACTUATION SYSTEM IN A MOTOR VEHICLE
DISPOSITIF PISTON-CYLINDRE NOTAMMENT DESTINÉ À UN SYSTÈME D'ACTIONNEMENT D'EMBRAYAGE DANS UN VÉHICULE À MOTEUR

(30) Priorität: 17.07.2012 DE 102012212446
(43) Veröffentlichungstag der Anmeldung: 27.05.2015
(73) Patentinhaber: Schaeffler Technologies AG & Co. KG, 91074 Herzogenaurach (DE)
(72) Erfinder: SESTER, Christof, 77723 Gengenbach (DE); GWOSCH, Thomas, 76139 Karlsruhe (DE); KRAHTOV, Luben, 76530 Baden-Baden (DE)
(86) Internationale Anmeldenummer: PCT/DE2013/200051
(87) Internationale Veröffentlichungsnummer: WO 2014/012540

(56) Entgegenhaltungen:
- DE-A1- 19 949 205
- DE-A1-102011 103 376

## Beschreibung

Die Erfindung betrifft eine Kolben-Zylinder-Anordnung, insbesondere für ein Kupplungsbetätigungssystem in einem Kraftfahrzeug, umfassend ein Gehäuse, das konzentrisch um eine Welle angeordnet ist und einen ringförmigen Druckraum, in dem ein Kolben beweglich gelagert ist, wobei ein Dichtringträger, an dem eine Dichtung angeordnet ist, mit dem Kolben verbunden ist.

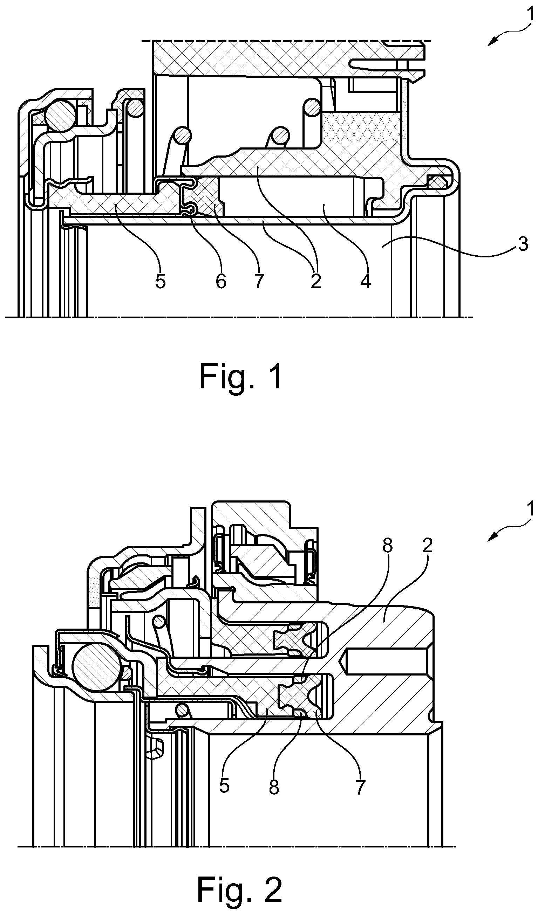

In Kraftfahrzeugen werden Kupplungsbetätigungseinrichtungen eingesetzt, um den Kraftschluss zwischen einem Motor und einem Getriebe zu trennen bzw. herzustellen. Bei hydraulischen Kupplungsnehmerzylindern wird eine Dichtung mit Hilfe eines Dichtringträgers mit einem definierten Axialspiel am Kolben befestigt oder spielfrei direkt am Kolben angeordnet. In Figur 1 ist eine Dichtungsanbindung mit einem definierten Axialspiel dargestellt. Der Kupplungsnehmerzylinder 1 umfasst ein Gehäuse 2, welches um eine Welle 3 rotationssymmetrisch angeordnet ist. Das Gehäuse 2 bildet dabei einen ringförmigen Druckraum 4, in welchem ein Kolben 5 beweglich gelagert ist. Der Kolben 5 trägt einen Dichtringträger 6, an dem eine Dichtung 7 befestigt ist. Der Dichtringträger 6 ist entweder aus Stahl oder aus einem Kunststoff gebildet. Die Kunststoffvariante wird üblicherweise verwendet, um die Spaltextrusion der Dichtung 7 zwischen Gehäuse 2 und Dichtringträger 6 zu vermeiden. Der Dichtringträger 6 ist mit einem definierten Axialspiel mit dem Kolben 5 verbunden. Dadurch wird der Dichtungsverschleiß, welcher durch Vibration, vorzugsweise der Kupplung, angeregt wird, im drucklosen Betriebszustand reduziert.

Bei einer spielfreien Variante, wie sie in Figur 2 dargestellt ist, liegt die Dichtung 7 direkt am Kolben 5 an. Um die Spaltextrusion zu vermeiden, werden als Dichtringträger zwei separate Kunststoffringe 8 verwendet. Durch die spielfreie Anbindung der Dichtung 7 an den Kolben 3 sind die Dichtungsposition und damit der Betriebszustand eindeutig definiert. Allerdings tritt bei dieser Anordnung ein größerer Verschleiß der Dichtung 7 auf, da die Vibrationen direkt an der Dichtung 7 angreifen. Darüber hinaus ist eine mehrteilige Anordnung in Form der Dichtung 7 und des Dichtringträgers in Form der beiden Kunststoffringe 8 notwendig, um die spielfreie Anbindung der Dichtung 7 an den Kolben 5 zu gewährleisten, was die Herstellungskosten für einen solchen Kupplungsnehmerzylinder 1 erhöht. Werden die Kunststoffringe 8 mit Verbindungsbrücken ausgelegt, wird der Kolben 5 geschwächt und es entstehen unstete Übergänge. Durch die Brücken wird ein orientierter Einbau notwendig.

Die DE 10 2011 103 376 A1 offenbart eine Kolben-Zylinder-Anordnung mit einer spielfreien Anbindung von Dichtringträger zum Kolben gemäß dem Oberbegriff des Patentanspruchs 1.

Der Erfindung liegt die Aufgabe zugrunde, eine Kolben-Zylinder-Anordnung anzugeben, bei welcher trotz kostengünstiger Herstellung Spaltextrusionen der Dichtung zwischen Dichtringträger und Gehäuse zuverlässig verhindert werden.

Erfindungsgemäß wird die Aufgabe dadurch gelöst, dass der Kolben mit dem Dichtringträger spielfrei verbunden ist. Durch den Einsatz eines einteilig ausgebildeten Kunststoffdichtringträgers werden die Spaltextrusionen der Dichtung zwischen Gehäuse und Dichtringträger zuverlässig vermieden. Die Verwendung eines solchen Kunststoffdichtringträgers reduziert die Herstellungskosten und minimiert den Montageaufwand.

Der Kolben ist erfindungsgemäß mit dem Dichtringträger über eine Gewindeverbindung verbunden. Die Gewindeverbindung stellt dabei die spielfreie Verbindung zwischen Kolben und Dichtringträger sicher. Die Spaltextrusion, welche beim Radialspiel der Dichtung zwischen Gehäuse und Dichtringträger auftritt, wird unterbunden, indem die Dichtung in Abhängigkeit von Temperatur und Druck in den Spalt hineingedrückt wird.

In einer Ausgestaltung ist die Gewindeverbindung innen oder außen am Kolben montiert. Somit kann entsprechend des in der jeweiligen Kupplungsbetätigungseinrichtung vorhandenen Bauraumes entschieden werden, wie die Gewindeverbindung ausgebildet ist, was weiterhin zu einer Kostenreduzierung bei der Herstellung der Kolben-Zylinder-Anordnung führt.

In einer Variante ist ein Drehsinn der Gewindeverbindung mit einer Drehrichtung des Kolbens abgestimmt, so dass der Dichtringträger sich im Betrieb des Kolbens auf diesen aufdreht. Damit wird sichergestellt, dass sich die Gewindeverbindung bei Bewegung des Kolbens und somit der Kupplung nicht öffnen kann, da durch den vorgegebenen Drehsinn der Gewindeverbindung diese immer in Schließrichtung bewegt wird.

In einer Ausführungsform ist eine Steigung eines Gewindes der Gewindeverbindung selbsthemmend ausgebildet. Da bei der Fertigung der Kolben-Zylinder-Anordnung sich das Drehmoment und der Drehwinkel bei dem Aufbringen der Gewindeverbindung steuern lässt, führt eine Selbsthemmung dazu, dass sich das Gewinde nicht weiter aufdreht und immer in Schließrichtung bewegt wird.

In einer Weiterbildung ist die Steigung des Gewindes flach ausgebildet. Die flache Ausbildung der Gewindesteigung gewährleistet die Selbsthemmung des Gewindes. Darüber hinaus ist bei einer flachen Gewindesteigung eine einfache Montage der Kolben-Zylinder-Anordnung gewährleistet.

Vorteilhafterweise weist die Gewindeverbindung Rasthaken auf. Diese Rasthaken bilden eine zusätzliche Sicherung zur Vermeidung des Aufdrehens der Gewindeverbindung. Durch die Wahl der Rasthaken kann ein gesicherter Drehwinkel definiert werden. Darüber hinaus wird die Axialbewegung zwischen den Rasthaken kleiner und somit gut abstimmbar.

In einer Ausgestaltung ist der einteilig ausgebildete Dichtringträger vorzugsweise annähernd rotationssymmetrisch ausgebildet. Durch die einteilige und im Umfang geschlossene Ausbildung des Dichtringträgers wird die Spaltextrusion weiter reduziert. Aufgrund der Ausbildung aus einem weichen Kunststoff wird durch den Dichtringträger eine Radialbewegung ausgeführt, wobei der Spalt zwischen Gehäuse und Kolben zuverlässig geschlossen wird.

In einer Variante ist die Dichtung ausschließlich am Dichtringträger befestigt und vorzugsweise in einer Wölbung des Dichtringträgers gelagert. Durch die Lagerung der Dichtung in dem Dichtringträger ist eine einfache Vormontage der Dichtung in dem Dichtringträger vor dem Einbau in die Kolben-Zylinder-Anordnung gegeben.

Darüber hinaus ist eine einfachere und robustere Handhabung des Dichtringträgers möglich.

In einer Weiterbildung weist der Dichtringträger annähernd ein U-ähnliches Profil auf, wobei eine Basis des U-ähnlichen Profils an dem Kolben anliegt, während die beiden Schenkel des U-ähnlichen Profils an dem Gehäuse anliegen und die Dichtung zwischen beiden Schenkeln des U-ähnlichen Profils des Dichtringträgers gelagert ist. Aufgrund dieser Ausgestaltung realisiert der Dichtringträger über das Gewinde nicht nur die spielfreie axiale Verbindung mit dem Kolben, sondern gleichzeitig die Reduzierung der Spaltextrusion mit Hilfe der Schenkel des U-ähnlichen Profils. Mittels dieser Ausgestaltung ist nur ein einziges Bauelement notwendig, um beide Aufgaben zu realisieren, wodurch der Herstellungsaufwand der Kolben-Zylinder-Anordnung reduziert wird.

Die Erfindung lässt zahlreiche Ausführungsformen zu. Eine davon soll anhand der in der Zeichnung dargestellten Figuren näher erläutert werden.

Es zeigt:
- Figur 1:: eine Kolben-Zylinder-Anordnung mit einem definierten Achsspiel nach dem Stand der Technik
- Figur 2:: eine weitere Kolben-Zylinder-Anordnung mit einer spiel freien Dichtungsanbindung nach dem Stand der Technik
- Figur 3:: ein Ausführungsbeispiel einer Kolben Zylinder-Anordnung gemäß der Erfindung
- Figur 4:: einen Schnitt durch die Kolben-Zylinder-Anordnung gemäß Figur 3

Gleiche Merkmale sind mit gleichen Bezugszeichen gekennzeichnet.

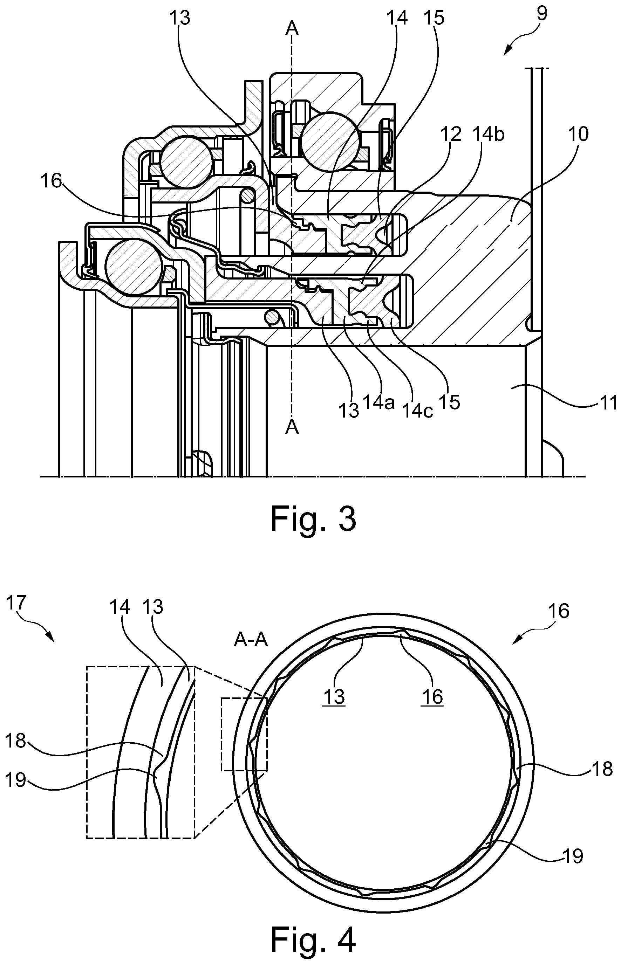

Figur 3 zeigt eine Kolben-Zylinder-Anordnung 9, wie sie als Kupplungsnehmerzylinder in einer Kupplungsbetätigungseinrichtung eines Kraftfahrzeugs Anwendung findet. Figur 3 zeigt dabei einen Ausschnitt aus einem Doppelkupplungsnehmerzylinder, welcher in Doppelkupplungsanordnungen eingesetzt wird. Ein Einsatz der Erfindung in einem Kupplungsnehmerzylinder zum Betreiben einer Einzelkupplung ist ebenfalls möglich.

Die Kolben-Zylinder-Anordnung 9 besteht aus einem Gehäuse 10, welches sich rotationssymmetrisch um eine Welle 11 erstreckt. In dem Gehäuse 10 erstreckt sich ein ringförmig ausgebildeter Druckraum 12, in dem ein Kolben 13 beweglich gelagert ist. Der Kolben 13 weist dabei in Richtung des Druckraumes 12 einen Dichtringträger 14 auf, in welchem eine Dichtung 15 angeordnet ist.

Der Dichtringträger 14 besitzt ein annähernd U-förmiges Profil, wobei die Basis 14a des Dichtringträgers 14 an dem Kolben 13 unmittelbar anliegt, während sich die Schenkel 14b, 14c des Dichtringträgers 14 entlang dem Gehäuse 10 axial erstrecken und dieses kontaktieren. Vorteilhafterweise weist das Gehäuse 10 nahe des, in Richtung der Welle 11 gelagerten Schenkels 14c eine nicht weiter dargestellte Führungshülse auf, wobei der eine Schenkel 14c direkt an der Führungshülse anliegt. Zwischen die Schenkel 14b, 14c des Dichtringträgers 14 ist die Dichtung 15 eingelegt, welche keinerlei Verbindung zum Kolben 13 aufweist. Die Dichtung 15 überragt den Dichtringträger 14 in axialer, dem Kolben 13 entgegen gesetzter Richtung und liegt oberhalb der Schenkel 14b, 14c des Dichtringträgers 14 an dem Gehäuse 10 an, wodurch die Spaltextrusion der Dichtung 15 zwischen Dichtringträger 14 und Gehäuse 10 reduziert oder ganz unterbunden wird.

Der Dichtringträger 14 ist mit dem Kolben 13 über eine Gewindeverbindung befestigt, wobei der Dichtringträger 14 im vorliegenden Fall auf den Kolben 13 aufgedreht ist. Der Kolben 13 weist dabei an seinem Außenumfang einen Gewindegang 16 auf.

Ein Querschnitt A-A der Kolben-Zylinder-Anordnung 9 ist in Figur 4 dargestellt. Dabei umfasst der Dichtringträger 14 den Kolben 13. Sowohl an der Innenfläche des Dichtringträgers 14 als auch an der Außenfläche des Kolbens 13 sind an dem Gewinde 17 Rasthaken 18, 19 ausgebildet. Diese Rasthaken 18, 19 werden genutzt, um ein Aufdrehen des Gewindes 17 zu vermeiden. Durch die Wahl der Rasthaken 18, 19 kann der gesicherte Drehwinkel definiert werden. Die Rasthaken 18, 19 ermöglichen somit, dass das Gewinde 17 selbsthemmend ausgebildet ist. Die Selbsthemmung des Gewindes 17 wird weiter dadurch unterstützt, dass die Gewindesteigung flach gewählt ist, was eine einfache Montage des Gewindes 17 gewährleistet.

Der Drehsinn des Gewindes 17 ist mit der Drehrichtung der nicht weiter dargestellten Kupplung abgestimmt, so dass sichergestellt ist, dass der Dichtringträger 14 sich im Betrieb der Kupplung immer auf den Kolben 13 aufdreht, so dass sich die Gewindeverbindung immer im geschlossenen Zustand befindet und ein Öffnen des Gewindes 17 zuverlässig verhindert wird.

Aufgrund der vorgeschlagenen Kolben-Zylinder-Anordnung wird gegenüber Dichtungsanbindungen mit einem definierten Axialspiel eine Kennlinienverschiebung der Kupplung bei schneller Kupplungsbetätigung zuverlässig unterbunden. Darüber hinaus wird durch die spielfreie Anbindung des Dichtringträgers 14 an den Kolben 13 über das Gewinde 17 die Montage vereinfacht.

### Bezugszeichenliste

- a.: Kupplungsnehmerzylinder
- b.: Gehäuse
- c.: Welle
- d.: Druckraum
- e.: Kolben
- f.: Dichtringträger
- g.: Dichtung
- h.: Kunststoffring
- i.: Kolben-Zylinder-Anordnung
- j.: Gehäuse
- k.: Welle
- l.: Druckraum
- m.: Kolben
- n.: Dichtringträger
- 14a: Basis des Dichtringträgers
- 14b: Schenkel des Dichtringträgers
- 14c: Schenkel des Dichtringträgers
- o.: Dichtung
- p.: Gewindegang
- q.: Gewinde
- r.: Rasthaken
- s.: Rasthaken

## Patentansprüche

1. Kolben-Zylinder-Anordnung, insbesondere für ein Kupplungsbetätigungssystem in einem Kraftfahrzeug, umfassend ein Gehäuse (10), das konzentrisch um eine Welle (11) angeordnet ist, und einen ringförmigen Druckraum (12), in dem ein Kolben (13) beweglich gelagert ist, wobei ein Dichtringträger (14), an dem eine Dichtung (15) angeordnet ist, mit dem Kolben (13) verbunden ist, **dadurch gekennzeichnet, dass** der Kolben (13) mit dem Dichtringträger (14) über eine Gewindeverbindung spielfrei verbunden ist.

2. Kolben-Zylinder-Anordnung nach Anspruch 1, **dadurch gekennzeichnet, dass** die Gewindeverbindung innen oder außen am Kolben (13) montiert ist.

3. Kolben-Zylinder-Anordnung nach Anspruch 1 oder 2, **dadurch gekennzeichnet, dass** ein Drehsinn der Gewindeverbindung mit einer Drehrichtung des Kolbens (13) abgestimmt ist, so dass der Dichtringträger (14) sich im Betrieb des Kolbens (13) auf diesen aufdreht.

4. Kolben-Zylinder-Anordnung nach einem der vorangehenden Ansprüche, **dadurch gekennzeichnet, dass** eine Steigung eines Gewindes (17) der Gewindeverbindung selbsthemmend ausgebildet ist.

5. Kolben-Zylinder-Anordnung nach Anspruch 4, **dadurch gekennzeichnet, dass** die Steigung des Gewindes (17) flach ausgebildet ist.

6. Kolben-Zylinder-Anordnung nach einem der vorhergehenden Ansprüche, **dadurch gekennzeichnet, dass** das Gewinde (17) Rasthaken (18, 19) aufweist.

7. Kolben-Zylinder-Anordnung nach einem der vorhergehenden Ansprüche, **dadurch gekennzeichnet, dass** der einteilig ausgebildete Dichtringträger (14) vorzugsweise annähernd rotationssymmetrisch ausgebildet ist.

8. Kolben-Zylinder-Anordnung nach einem der vorangehenden Ansprüche, **dadurch gekennzeichnet, dass** die Dichtung (15) ausschließlich am Dichtringträger (14) befestigt ist und vorzugsweise in einer Wölbung des Dichtungsringträgers (14) gelagert ist.

9. Kolben-Zylinder-Anordnung nach mindestens einem der vorhergehenden Ansprüche, **dadurch gekennzeichnet, dass** der Dichtringträger (14) annähernd ein U-ähnliches Profil aufweist, wobei eine Basis (14a) des U-ähnlichen Profils an dem Kolben (13) anliegt, während die beiden Schenkel (14b, 14c) des U-ähnlichen Profils an dem Gehäuse (10) anliegen und die Dichtung (15) zwischen beiden Schenkeln (14b, 14c) des U-ähnlichen Profils des Dichtringträgers (14) gelagert ist.

## Claims

1. Piston/cylinder arrangement, in particular for a clutch actuation system in a motor vehicle, comprising a housing (10) which is arranged concentrically around a shaft (11), and an annular pressure space (12), in which a piston (13) is mounted movably, a sealing ring carrier (14), on which a seal (15) is arranged, being connected to the piston (13), **characterized in that** the piston (13) is connected without play to the sealing ring carrier (14) via a threaded connection.

2. Piston/cylinder arrangement according to Claim 1, **characterized in that** the threaded connection is mounted on the piston (13) on the inside or on the outside.

3. Piston/cylinder arrangement according to Claim 1 or 2, **characterized in that** a rotational direction of the threaded connection is coordinated with a rotational direction of the piston (13), with the result that the sealing ring carrier (14) is rotated onto the piston (13) during operation of the latter.

4. Piston/cylinder arrangement according to one of the preceding claims, **characterized in that** a lead of a thread (17) of the threaded connection is of self-locking configuration.

5. Piston/cylinder arrangement according to Claim 4, **characterized in that** the lead of the thread (17) is of flat configuration.

6. Piston/cylinder arrangement according to one of the preceding claims, **characterized in that** the thread (17) has latching hooks (18, 19).

7. Piston/cylinder arrangement according to one of the preceding claims, **characterized in that** the sealing ring carrier (14) which is configured in one piece is preferably of approximately rotationally symmetrical configuration.

8. Piston/cylinder arrangement according to one of the preceding claims, **characterized in that** the seal (15) is fastened exclusively to the sealing ring carrier (14) and is preferably mounted in a curved portion of the sealing ring carrier (14).

9. Piston/cylinder arrangement according to at least one of the preceding claims, **characterized in that** the sealing ring carrier (14) has approximately a U-shaped profile, a base (14a) of the U-shaped profile bearing against the piston (13), whereas the two legs (14b, 14c) of the U-shaped profile bear against the housing (10) and the seal (15) is mounted between the two legs (14b, 14c) of the U-shaped profile of the sealing ring carrier (14).

## Revendications

1. Ensemble cylindre-piston, en particulier pour un système d'actionnement d'embrayage dans un véhicule automobile, comprenant un boîtier (10) qui est disposé concentriquement autour d'un arbre (11) et un espace de pression annulaire (12), dans lequel est supporté de manière déplaçable un piston (13), un support de bague d'étanchéité (14), sur lequel est disposé un joint d'étanchéité (15) étant connecté au piston (13), **caractérisé en ce que** le piston (13) est connecté sans jeu au support de bague d'étanchéité (14) par le biais d'une connexion filetée.

2. Ensemble cylindre-piston selon la revendication 1, **caractérisé en ce que** la connexion filetée est montée à l'intérieur ou à l'extérieur sur le piston (13).

3. Ensemble cylindre-piston selon la revendication 1 ou 2, **caractérisé en ce qu'**un sens de rotation de la connexion filetée est ajusté à un sens de rotation du piston (13), de telle sorte que le support de bague d'étanchéité (14), pendant le fonctionnement du piston (13), se visse sur celui-ci.

4. Ensemble cylindre-piston selon l'une quelconque des revendications précédentes, **caractérisé en ce qu'**un pas d'un filetage (17) de la connexion filetée est réalisé de manière autobloquante.

5. Ensemble cylindre-piston selon la revendication 4, **caractérisé en ce que** le pas de filetage (17) est réalisé sous forme plate.

6. Ensemble cylindre-piston selon l'une quelconque des revendications précédentes, **caractérisé en ce que** le filetage (17) présente des crochets d'encliquetage (18, 19).

7. Ensemble cylindre-piston selon l'une quelconque des revendications précédentes, **caractérisé en ce que** le support de bague d'étanchéité (14) réalisé d'une seule pièce est réalisé au moins approximativement avec une symétrie de révolution.

8. Ensemble cylindre-piston selon l'une quelconque des revendications précédentes, **caractérisé en ce que** le joint d'étanchéité (15) est fixé exclusivement sur le support de bague d'étanchéité (14) et est supporté de préférence dans une courbure du support de bague d'étanchéité (14).

9. Ensemble cylindre-piston selon au moins l'une quelconque des revendications précédentes, **caractérisé en ce que** le support de bague d'étanchéité (14) présente un profil approximativement en forme de U, une base (14a) du profil en forme de U s'appliquant contre le piston (13), tandis que les deux branches (14b, 14c) du profil en forme de U s'appliquent contre le boîtier (10) et le joint d'étanchéité (15) est supporté entre les deux branches (14b, 14c) du profil en forme de U du support de bague d'étanchéité (14).
